# DEMANDE DE BREVET EUROPEEN

(11) **EP 1 241 894 A1**
(43) Date de publication de la demande: **18.09.2002**
(21) Numéro de dépôt: 02075766.2
(22) Date de dépôt: 26.02.2002
(51) Int. Cl.: H04N 7/26, H04N 7/68

(54) **Procédé de codage d'images numériques basé sur la dissimulation d'erreurs**

(30) Priorité: 06.03.2001 FR 0103047
(71) Demandeur: Koninklijke Philips Electronics N.V., 5621 BA Eindhoven (NL)
(72) Inventeur: Valente, Stéphane, Société Civile S.P.I.D., 75008 Paris (FR); Dufour, Cécile, Société Civile S.P.I.D., 75008 Paris (FR)
(74) Mandataire: Chaffraix, Jean

(57) **Abrégé**

L'invention concerne un procédé de codage d'une image numérique comprenant des macroblocs en un flux binaire comprenant une étape d'estimation, pour des macroblocs, d'une capacité à être reconstruits par un procédé de dissimulation d'erreur, une étape de décision, pour des macroblocs, d'exclusion du codage, une décision d'exclusion d'un macrobloc étant prise en fonction de la capacité à être reconstruit dudit macrobloc et une étape d'introduction d'un marqueur de resynchronisation dans le flux binaire suite à l'exclusion d'un ou plusieurs macroblocs.

L'invention rend possible l'exclusion de macroblocs du codage, et ainsi la diminution des ressources de transmission requises, pour les standards de codage nécessitant des processus de resynchronisation du flux de données.

Applications : Codeur et décodeur selon les standards MPEG-4, H26L...

## Description

L'invention concerne un procédé de codage d'une image numérique comprenant des macroblocs en un flux binaire comprenant :
- une étape d'estimation, pour des macroblocs, d'une capacité à être reconstruits par un procédé de dissimulation d'erreur,
- une étape de décision, pour des macroblocs, d'exclusion du codage, une décision d'exclusion d'un macrobloc étant prise en fonction de la capacité à être reconstruit dudit macrobloc.

Un tel procédé de codage est connu du document :Geometric-Structure-Based Error Concealment with Novel Applications in Block-Based Low-Bit-Rate Coding » de W. Zeng and B. Liu dans IEEE Transactions on Circuits and Systems For Video Technology, Vol. 9, N° 4, June 1999. Ce document décrit des exclusions de blocs appartenant à des macroblocs, ensemble de blocs, lesdits macroblocs pouvant être codés en inter ou en intra. Ce document propose une mise en accord de cette exclusion de blocs avec les standards de codage vidéo : soit, dans une première solution, par remplacement des blocs non codés par des blocs constants, noirs par exemple, ensuite détectés par le récepteur, soit, dans une deuxième solution, par modification du mot qui définit quels sont les blocs codés à l'intérieur d'un macrobloc, ladite modification s'accompagnant d'une modification des mots d'adresse des macroblocs quand tous les blocs d'un macrobloc sont exclus. Un certain nombre de bits sont alloués pour communiquer l'adresse des blocs exclus au sein des macroblocs codés en inter.

L'invention est liée aux considérations suivantes :

Le standard MPEG-4 définit une syntaxe de codage et propose un certain nombre d'outils pour gérer des erreurs de transmission. Ces outils pour gérer les erreurs imposent certaines contraintes. Parmi ceux-ci, le standard MPEG-4 propose des outils de resynchronisation du flux binaire de données qui introduisent périodiquement des marqueurs de resynchronisation dans le flux de données. Ces marqueurs sont utilisés par le récepteur qui se recale grâce à eux lors du décodage. Quand une erreur survient dans le flux de données, le récepteur ne peut plus lire les données jusqu'à ce qu'il repère un marqueur de resynchronisation suivant. L'ensemble constitué du marqueur et des données entre ce marqueur et le marqueur suivant est appelé un paquet vidéo. Le marqueur de resynchronisation est inclus dans un élément d'entête du paquet vidéo. L'élément d'entête inclut aussi le numéro du premier macrobloc du paquet vidéo pour permettre la resynchronisation spatiale, et des paramètres permettant au récepteur de poursuivre le décodage. Les numéros des macroblocs suivants ne sont pas présents dans le flux de données. La resynchronisation telle que définie dans le standard MPEG-4 peut être ainsi qualifiée de ponctuelle car elle n'existe que pour certaines données d'un flux, le reste du flux étant passivement interprété. Il n'est donc pas possible, dans ce cas, de changer les adresses des macroblocs ou d'indiquer quels blocs ne sont pas codés, conformément à la deuxième solution proposée dans le document cité. Tous les macroblocs sont ainsi décodés et placés l'un après l'autre, engendrant des erreurs graphiques par « décalage » d'éléments d'image si des macroblocs ont été exclus. La première solution proposée dans le document cité implique, elle, une détection, au niveau du décodeur, des blocs constants remplaçant les blocs exclus. Ladite détection n'étant pas prévue dans la syntaxe MPEG-4, cela engendrera des erreurs graphiques sur la majorité des récepteurs.

Un but de l'invention est de proposer un procédé de codage incluant une exclusion de macroblocs ayant une certaine capacité à être reconstruits du codage compatible avec les standards de codage incluant des moyens de resynchronisation ponctuelle.

En effet, un procédé de codage conforme au paragraphe introductif est remarquable selon l'invention en ce qu'il comprend également une étape d'introduction d'un marqueur de resynchronisation dans le flux binaire suite à l'exclusion d'un ou plusieurs macroblocs.

Le marqueur de resynchronisation représente un certain nombre de bits dans le flux de données (au moins entre 17 et 23 bits). Un autre but de l'invention est de réduire le flux binaire attaché à la transmission des images numériques par exclusion de macroblocs. Etant donnée que, selon l'invention, l'exclusion d'un ou, plus généralement, plusieurs macroblocs engendre l'introduction d'un marqueur de resynchronisation représentant un certain nombre de bits, cette exclusion de macroblocs peut ne rien apporter en terme de diminution du flux binaire.

Dans un mode de réalisation particulièrement avantageux, le procédé de codage est caractérisé en ce que l'étape de décision comprend une sous-étape d'évaluation de la diminution du flux binaire engendré par une exclusion de macroblocs, la décision d'exclusion de macroblocs étant prise en fonction d'un critère sur la diminution du flux binaire engendré par ladite exclusion.

La présente invention peut être mise en oeuvre dans un codeur, par exemple, un codeur vidéo. La présente invention concerne également un flux de données tel que produit par un procédé selon l'invention. L'invention concerne aussi, par conséquent, un procédé de décodage et un décodeur permettant de réaliser un décodage correct d'un flux de données tel que produit par un procédé selon l'invention. Enfin, l'invention concerne des programmes d'ordinateur pour mettre en oeuvre les différentes étapes des procédés selon l'invention.

L'invention sera mieux comprise à la lumière de la description suivante de quelques modes de réalisation, faite à titre d'exemple et en regard des dessins annexés, dans lesquels :
la figure 1 est un schéma fonctionnel représentant les différentes étapes d'un procédé de codage d'une image numérique comprenant des macroblocs en un flux binaire.
la figure 2 illustre l'action du procédé selon l'invention sur un flux comprenant des données codées d'une image numérique comprenant des macroblocs.
la figure 3 est un diagramme schématique d'un codeur vidéo selon l'invention.
la figure 4 est un diagramme schématique d'un décodeur vidéo selon l'invention.

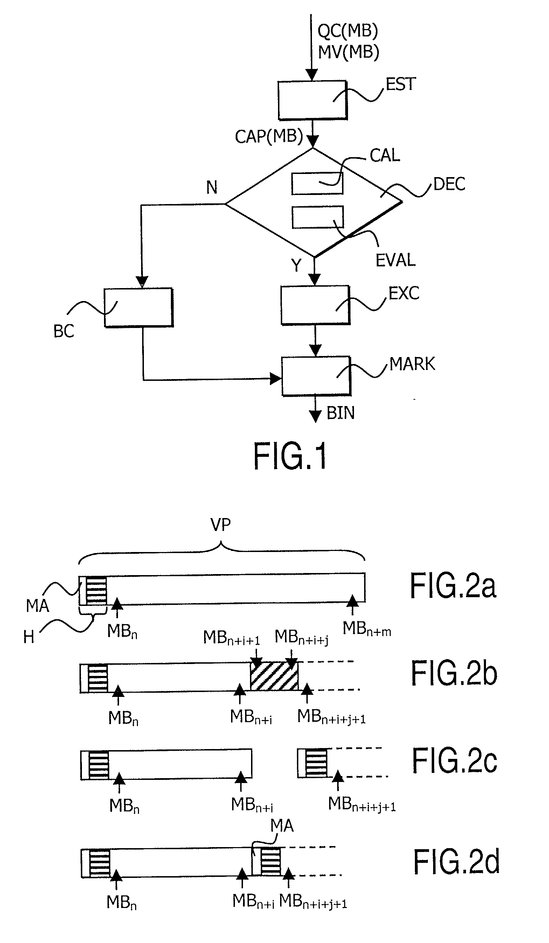

La figure 1 est un schéma fonctionnel représentant les différentes étapes d'un procédé de codage d'une image numérique comprenant des macroblocs MB en un flux binaire selon l'invention. Dans le mode de réalisation présenté ici, le procédé selon l'invention concerne, spécifiquement, la partie du codage effectuée sur des macroblocs MB déjà transformés sous forme d'un ensemble de coefficients quantifiés QC(MB) et de vecteurs mouvement MV(MB). Ce sont ces coefficients quantifiés QC(MB) et ces vecteurs mouvement MV(MB) qui sont, dans ce mode de réalisation, présentés à l'entrée du procédé. Une première étape d'estimation EST estime une capacité CAP(MB) des macroblocs à être reconstruits par un procédé de dissimulation d'erreurs. L'estimation de cette capacité peut comprendre différents critères.

Ces critères correspondent aux moyens de dissimulation d'erreurs disponibles dans les décodeurs. Ainsi deux grandes catégories de dissimulation d'erreurs sont possibles : la dissimulation spatiale d'erreurs et la dissimulation temporelle d'erreurs. En particulier les régions homogènes et les régions de mouvement homogène sont susceptibles de présenter une certaine capacité à être reconstruites par un procédé de dissimulation d'erreurs.

Par exemple, un premier ensemble de critères concerne les régions homogènes et, par conséquent, met en oeuvre la dissimulation spatiale d'erreurs : répétition adjacente de macroblocs se ressemblant dans une succession de macroblocs, ou facilité avec laquelle un macrobloc peut être reconstruit par interpolation spatiale à partir de ses voisins. Ces deux critères peuvent, par exemple, être pratiquement et simplement évalués par calcul d'une différence entre le macrobloc potentiellement exclu et un ou des macroblocs soit adjacents, soit interpolés spatialement à partir de macroblocs voisins, ledit calcul étant effectué au sein de l'étape d'estimation EST.

Un autre ensemble de critères concerne les régions de mouvement homogène et met en oeuvre la dissimulation temporelle d'erreurs. Par exemple, les macroblocs appartenant à des régions de mouvement homogène peuvent ainsi être exclus, les vecteurs mouvement des macroblocs voisins pouvant être utilisés pour interpoler les macroblocs exclus. Ce critère peut être évalué par calcul d'une différence entre vecteurs mouvement de macroblocs voisins et entre coefficients de quantification d'un signal résiduel des macroblocs d'une image à la suivante.

L'estimation de la capacité CAP(MB) peut ainsi être réalisée par des moyens très divers accessibles à l'homme du métier. La capacité CAP(MB), donnée de sortie de l'étape d'estimation EST peut être binaire ou être un nombre dont la valeur est, par exemple, déterminée en fonction de l'importance de la différence entre le macrobloc potentiellement exclu et un macrobloc interpolé.

Le procédé selon l'invention comprend ensuite une étape de décision DEC d'exclusion du codage de macroblocs. Cette prise de décision se fait sur la base de la capacité CAP(MB) des macroblocs à être reconstruits. Si la capacité CAP(MB) est binaire, le macroblocs est exclu pour une valeur du bit, si la capacité CAP(MB) est un nombre, le macrobloc est, par exemple, exclu pour les valeurs de la capacité dépassant un seuil déterminé. Ce seuil déterminé peut être fixe ou être modulé en fonction des ressources disponibles pour la transmission comme décrit plus loin. Ces conditions sur la capacité CAP(MB) définissent la « bonne » capacité à être reconstruit dans la suite de la description.

Dans une mise en oeuvre particulièrement avantageuse de l'invention, l'étape de décision comprend une sous-étape d'évaluation de la diminution du flux binaire engendré par une exclusion de macroblocs, la décision d'exclusion de macroblocs étant prise en fonction d'un critère sur la diminution du flux binaire engendré par ladite exclusion. Cette étape est justifiée par le fait que l'introduction du marqueur de resynchronisation implique l'introduction d'un élément d'entête complet qui représente un certain nombre de bits dans le flux de données (entre 17 et 23 bits au minimum). Un autre but de l'invention est de réduire le flux binaire attaché à la transmission des images par exclusion de macroblocs. Etant donnée que, selon l'invention, l'exclusion d'un ou, plus généralement, plusieurs macroblocs engendre l'introduction d'un élément d'entête complet représentant un certain nombre de bits, ladite exclusion de macroblocs peut ne rien apporter à la diminution du flux binaire. Une évaluation de la diminution du flux binaire engendrée par l'exclusion de macroblocs est ainsi utile. Dans cette étape EVAL le nombre de bits économisés par l'exclusion d'un certain nombre de macroblocs est évalué, ce nombre est ensuite comparé, par exemple dans l'étape de décision DEC, au nombre de bits que représente l'introduction d'un élément d'entête. La décision d'exclusion est prise quand la diminution du flux binaire résultant de l'exclusion des macroblocs du codage n'est pas nulle.

Avantageusement, le procédé selon l'invention comprend une étape de calcul CAL d'un débit de sortie du flux binaire, la décision d'exclusion de macroblocs étant prise en fonction de ce débit de sortie du flux binaire. Cette étape de calcul CAL est en liaison avec des moyens de transmission des macroblocs codés qui transportent le flux binaire.

Lesdites étapes CAL, EST et EVAL peuvent aussi être combinées : par exemple le résultat de l'étape de calcul CAL peut influencer la valeur du seuil déterminant la « bonne » capacité des macroblocs à être reconstruits, ledit seuil étant d'autant plus exigeant pour la capacité à être reconstruit que le flux disponible est important. Il est ainsi possible d'envisager une étape combinant les résultats de l'étape d'évaluation EVAL et de l'étape de calcul CAL pour déterminer une valeur de seuil pour les capacités CAP(MB) au-delà duquel des macroblocs ayant une capacité CAP(MB) supérieure à ce seuil sont exclus dans l'étape de décision DEC.

Suivant le résultat de l'étape de décision DEC, soit le macrobloc est inséré dans le paquet vidéo dans une étape BC (cas N), soit le macrobloc est exclu du codage dans une étape EXC (cas Y). Dans l'étape BC, les bits sont comptés pour engendrer l'introduction d'un marqueur de resynchronisation dans une étape MARK lorsque la taille adéquate est atteinte pour le paquet vidéo. Après chaque étape EXC, un marqueur de resynchronisation est inséré dans le flux binaire dans l'étape MARK. Le terme « marqueur de synchronisation » doit être interprété ici dans un sens général comme pouvant inclure, par exemple dans le standard MPEG-4, les marqueurs classiques RESYNC, VOPStart (début d'une instance temporelle (plan) d'un objet vidéo), GOVStart (début d'un groupe d'instances temporelles d'un objet vidéo), EOS (fin de session vidéo). En sortie du procédé, un flux binaire BIN est ainsi obtenu.

Il est à noter que le remplissage des paquets vidéo peut indifféremment utiliser un partitionnement de données et que l'invention est, en général, indifférente à l'utilisation ou non d'un partitionnement de données.

Il faut noter que le standard MPEG-4 propose déjà de ne pas coder certains macroblocs dans un objet vidéo ou, plus généralement, dans une image vidéo, en signalant cette absence de codage par la présence d'un indicateur (en anglais : flag) « not coded ». La présence de cet indicateur est interprétée par les décodeurs qui remplacent le macrobloc non codé par le macrobloc situé au même endroit sur une instance précédente de l'objet vidéo dans le temps. En général, l'instance juste précédente est utilisée. Par conséquent, cet indicateur n'est utilisable que pour les images codées P pour lesquelles une instance précédente est disponible et est implicitement répercuté sur les images codées B. L'introduction d'un te! indicateur n'est donc intéressant que pour des régions ayant un vecteur mouvement presque nul et pour lesquelles la texture n'a pas beaucoup changé d'une image ou d'une instance à l'autre. L'exclusion du codage de macroblocs suivant l'invention n'engendre l'insertion d'aucun indicateur particulier et l'exclusion de macroblocs au codage est ainsi possible pour tous les types de codage I, P ou B.

La figure 2 illustre l'action du procédé selon l'invention sur un flux binaire comprenant des données codées d'une image numérique ou d'un objet vidéo comprenant des macroblocs. Sur la figure 2a est représenté un paquet vidéo VP comprenant un élément d'entête H incluant un marqueur de resynchronisation MA. La périodicité des marqueurs peut être basée sur un nombre de macroblocs ou, plus avantageusement, sur un nombre de bits. Cette dernière solution, choisie préférentiellement par le standard MPEG-4, permet d'avoir une répartition régulière des marqueurs le long du flux. Dans tous les cas, un marqueur de resynchronisation et les données qui suivent jusqu'au marqueur de resynchronisation suivant définissent un paquet vidéo. Dans le cas où la périodicité des marqueurs est basée sur un nombre de bits, la longueur de ces paquets vidéo est déterminée selon un mécanisme par lequel : si le nombre de bits contenu dans le paquet vidéo courant dépasse une valeur seuil, un nouveau paquet vidéo est créé au début du macrobloc suivant par introduction d'un marqueur de resynchronisation.

Dans le standard MPEG-4, des informations nécessaires pour redémarrer le processus de décodage au sein du récepteur ainsi que le numéro n du premier macrobloc MB(n) du paquet vidéo et les paramètres de quantification nécessaires pour décoder ce premier macrobloc sont inclus dans un élément d'entête incluant le marqueur de resynchronisation. Le numéro n du premier macrobloc permet la resynchronisation spatiale et les paramètres de quantification permettent de resynchroniser le processus de décodage différentiel. Les numéros des macroblocs suivants ne sont pas indiqués.

Sur la figure 2b sont représentés en hachures inclinées, des macroblocs ayant une bonne capacité à être reconstruits. Ce sont les j macroblocs MBₙ₊ᵢ₊₁ à MBₙ₊ᵢ₊ⱼ. Lorsque ces macroblocs sont introduits dans le procédé décrit ci-dessus et sur la figure 1, la construction du paquet vidéo est arrêtée par la décision d'exclusion EXC illustrée schématiquement sur la figure 2c. La représentation schématique ici présentée montre un cas sans partitionnement de données où les macroblocs se suivent simplement, en série. Un partitionnement de données est compatible avec le principe de l'invention. Le flux résultant est alors représenté sur la figure 2d. Un marqueur de resynchronisation MA et l'élément d'entête associé ont été introduits dans le flux à l'endroit où le premier des macroblocs exclus aurait dû être et avant le macrobloc MBₙ₊ᵢ₊ⱼ₊₁. Ici, la diminution de flux engendrée par l'introduction du marqueur de resynchronisation MA et de l'élément d'entête associé n'est pas nul d'après la figure 2 : le bloc représentant les macroblocs exclus MBₙ₊ᵢ₊₁ à MBₙ₊ᵢ₊ⱼ étant plus important que la taille de l'élément d'entête introduit. En présence d'une étape d'évaluation EVAL dans le procédé, cette exclusion de macroblocs a lieu ; ce ne serait pas le cas si, en présence d'une étape d'évaluation EVAL, le bloc représentant les macroblocs avait été de taille inférieure à celle de l'élément d'entête.

Le flux binaire comprenant des données codées d'une image numérique comprenant des macroblocs, ledit flux binaire étant tel que des macroblocs MBₙ₊ᵢ₊₁ à MBₙ₊ᵢ₊ⱼ ne sont pas codés dans le flux binaire à au moins un endroit du flux binaire, lesdits macroblocs non codés ayant une capacité à être reconstruits par un procédé de dissimulation d'erreur, ledit flux binaire est alors caractérisé selon l'invention en ce qu'un marqueur de resynchronisation MA est présent dans le flux binaire à l'endroit du flux binaire où des macroblocs ne sont pas codés.

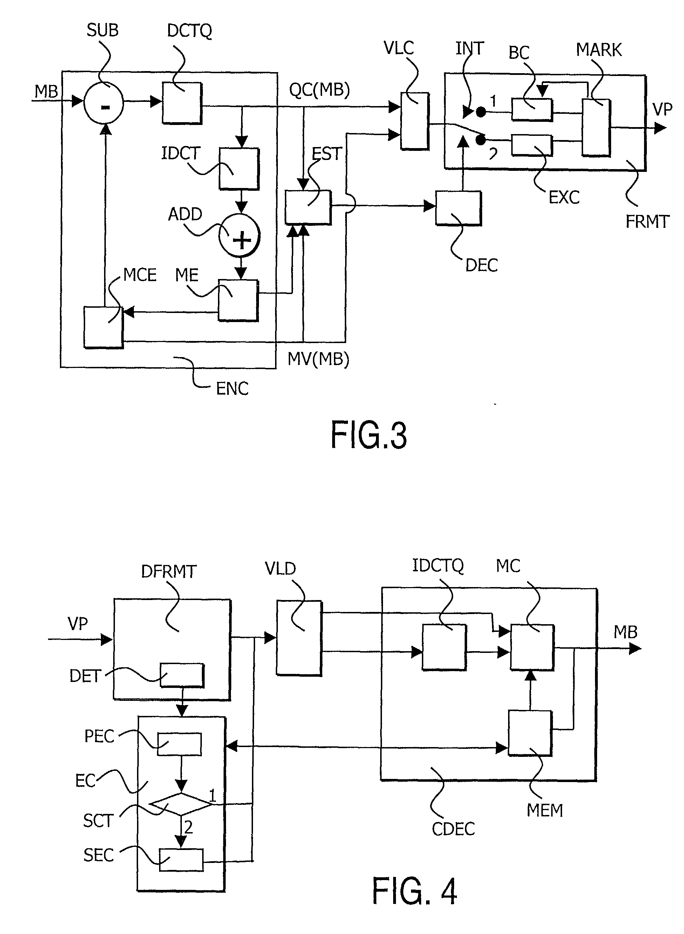

La figure 3 est un diagramme schématique d'un codeur vidéo selon l'invention. Le codeur vidéo représenté sur la figure 3 reçoit des données graphiques sous forme de macroblocs MB. Ces données graphiques sont transformées au sein d'un premier étage de codage ENC dans lequel l'information comprise dans les macroblocs est codée en coefficients quantifiés QC(MB) et en vecteurs mouvement MV(MB) par différentes opérations d'addition ADD, de soustraction SUB, de transformées DCTQ et IDCTQ, d'estimation et de compensation du mouvement MCE. Une mémoire MEM permet la réalisation de certaines de ces opérations et permet de stocker des données d'images. Le codage des macroblocs peut être inter ou intra. Les coefficients quantifiés et les vecteurs mouvement sont envoyés d'une part vers un codeur de mots de longueur variable VLC et d'autre part vers un module d'estimation EST. Avantageusement, ainsi que représenté sur la figure 3, le module d'estimation EST est couplé avec la mémoire MEM du premier étage de codage ENC. Au sein du codeur VLC, les coefficients quantifiés QC(MB) et les vecteurs mouvement MV(MB) sont mis sous une première forme destinée à être ensuite formatée. Au sein du module d'estimation EST, la capacité des macroblocs à être reconstruits par un procédé de dissimulation d'erreur est estimée. Cette valeur est ensuite envoyée à un module de décision DEC relié à un interrupteur INT appartenant à un formateur FRMT qui formate les données qui lui sont présentées sous la forme de sortie du codeur VLC. Le module de décision DEC, suivant la valeur de la capacité CAP(MB) et, avantageusement, du résultat d'une étape d'évaluation de la diminution du flux et d'une étape de calcul d'un débit de sortie du flux, actionne l'interrupteur INT entre deux chemins de codage. Lorsque le module de décision DEC actionne l'interrupteur en position 1, le paquet vidéo est construit de manière classique en comptant les bits ou les macroblocs dans un module BC. L'introduction d'un élément d'entête incluant un marqueur de resynchronisation par un module de marquage MARK est alors déclenchée lorsque la taille requise est atteinte pour le paquet vidéo. Lorsque le module de décision DEC actionne l'interrupteur en position 2, les macroblocs pour lesquels le module de décision a décidé l'exclusion sont exclus du codage par un module réalisant une étape d'exclusion EXC. Après chaque étape EXC, un élément d'entête incluant un marqueur de resynchronisation est inséré dans le flux par le module MARK. Des paquets vidéo VP conformes à ceux décrits sur la figure 2a et 2d sont, ainsi, obtenus en sortie du formateur FRMT.

L'agencement des différentes modules de ce codeur est conforme à un mode de réalisation particulier non à l'exclusion d'autres modes de réalisation qui pourraient apparaître à l'homme du métier.

La figure 4 est un diagramme schématique d'un décodeur vidéo selon l'invention. Le décodeur reçoit le flux binaire codé, par exemple, sous forme de paquets vidéo VP illustrés sur la figure 2, via un canal de transmission qui n'est pas montré. En réponse, il fournit une séquence de macroblocs décodés MB. Le décodeur comprend un déformateur DFRMT, un décodeur de mots de longueur variable VLD, un étage de décodage CDEC. L'étage de décodage CDEC inclut une transformée inverse IDCTQ, un compensateur de mouvement MC et une mémoire MEM. Le déformateur DFRMT comprend un module de détection DET destiné à détecter des macroblocs non codés en au moins un endroit du flux binaire. Le module de détection DET est couplé avec un module de dissimulation d'erreur EC destiné à être notamment activé pour les macroblocs non codés détectés dans l'étape de détection DET. Le module de dissimulation d'erreur EC ainsi activé reconstruit le macrobloc.

Le décodeur selon l'invention est caractérisé en ce que le module de détection DET de macroblocs non codés comprend un sous-module de détection destiné à détecter des intervalles non réguliers entre les marqueurs de resynchronisation. Ainsi la sous-étape détecte les macroblocs non codés en utilisant une détection d'un marqueur de resynchronisation à l'endroit même où des macroblocs ne sont pas codés. Dans une mise en oeuvre de l'invention concernant des paquets vidéo formés en comptant les macroblocs pour atteindre la taille requise, à chaque marqueur de resynchronisation, le décodeur selon l'invention compte les macroblocs présents dans le paquet vidéo précédent et, avec l'aide du numéro du premier macrobloc du paquet vidéo qu'il vient de finir de recevoir et le numéro du premier macrobloc du paquet vidéo qui commence, déduit que des macroblocs n'ont pas été codés et détecte ainsi l'introduction d'un marqueur de resynchronisation à l'endroit où des macroblocs n'ont pas été codés. Le module de détection DET peut aussi être destiné à détecter, par exemple, des erreurs dans le flux, lesdites erreurs étant dissimulées par le module de dissimulation d'erreur EC couplé audit module de détection DET. Les macroblocs reconstruits sont insérés en respectant l'ordre correspondant à l'image ou à l'objet vidéo au sein des données de sortie du déformateur DFRMT. Cette insertion des données reconstruites peut être cependant réalisée en plusieurs endroits ou étapes du décodage suivant la grandeur qui est effectivement reconstruite.

Le décodeur ici présenté met donc en oeuvre un procédé de décodage d'un flux binaire comprenant des données codées d'une image numérique comprenant des macroblocs, incluant une étape de détection de macroblocs non codés en au moins un endroit du flux binaire, une étape de dissimulation d'erreur EC notamment activée pour les macroblocs non codés détectés dans l'étape de détection DET, caractérisé en ce que l'étape de détection de macroblocs non codés comprend une sous-étape de détection destinée à détecter des intervalles non réguliers entre les marqueurs de resynchronisation.

Le procédé de décodage ici décrit peut être appliqué, entre autres, aux standards MPEG-4, H26L.

Dans un mode de réalisation avantageux illustré sur la figure 4, le module de dissimulation d'erreur EC comprend des moyens premiers PEC de reconstruction première, c'est-à-dire, par exemple, temporelle, de l'erreur, des moyens d'appréciation SCT de cette reconstruction première décidant de modifier (cas 2) la reconstruction de l'erreur ou de valider (cas 1) la reconstruction première, des moyens seconds SEC de reconstruction seconde, c'est-à-dire, par exemple, spatiale, activée quand l'étape d'appréciation décide de modifier la reconstruction de l'erreur. Par exemple, un macrobloc non codé appartenant à une image codée intra (I) sera mieux corrigé par une dissimulation spatiale d'erreurs alors qu'un macrobloc non codé appartenant à une image codée inter (P ou B) sera mieux corrigé soit par une dissimulation spatiale d'erreurs soit par une dissimulation temporelle d'erreurs. Le mode de réalisation avantageux présenté permet ainsi d'obtenir une reconstruction optimisée en essayant et testant différents types de dissimulation d'erreurs. L'homme du métier mettra ainsi en oeuvre différents moyens de reconstruction suivis de tests d'appréciation de la qualité de la reconstruction (tests de continuité spatiale...) suivant des combinaisons plus ou moins complexes sans s'exclure de la portée de l'invention.

Il existe de nombreuses façons de mettre en oeuvre les fonctions présentées dans les étapes des procédés selon l'invention par des moyens logiciels et/ou matériels accessibles à l'homme du métier. C'est pourquoi les figures sont schématiques. Ainsi, bien que les figures montrent différentes fonctions réalisées par différents blocs, cela n'exclut pas qu'un seul moyen logiciel et/ou matériel permette de réaliser plusieurs fonctions. Cela n'exclut pas non plus qu'une combinaison de moyens logiciels et/ou matériels permettent de réaliser une fonction.

Ainsi, de nombreuses modifications peuvent être réalisées par un homme du métier sans pour autant s'exclure de l'esprit et de la portée définis par les revendications suivantes.

## Revendications

1. Procédé de codage d'une image numérique comprenant des macroblocs en un flux binaire comprenant :
- une étape d'estimation, pour des macroblocs, d'une capacité à être reconstruits par un procédé de dissimulation d'erreur,
- une étape de décision, pour des macroblocs, d'exclusion du codage, une décision d'exclusion d'un macrobloc étant prise en fonction de la capacité à être reconstruit dudit macrobloc,
**caractérisé en ce qu'**il comprend également une étape d'introduction d'un marqueur de resynchronisation dans le flux binaire suite à l'exclusion d'un ou plusieurs macroblocs.

2. Procédé de codage selon la revendication 1 **caractérisé en ce que** l'étape de décision comprend une sous-étape d'évaluation de la diminution du flux binaire engendré par une exclusion de macroblocs, la décision d'exclusion de macroblocs étant prise en fonction d'un critère sur la diminution du flux binaire engendré par ladite exclusion.

3. Procédé de codage selon l'une des revendications 1 et 2, **caractérisé en ce qu'**il comprend une étape de calcul d'un débit de sortie du flux binaire, la décision d'exclusion de macroblocs étant prise en fonction de ce débit de sortie du flux binaire.

4. Codeur destiné au codage d'une image numérique comprenant des macroblocs en un flux binaire comprenant :
- un module d'estimation destiné à estimer, pour des macroblocs, une capacité à être reconstruits par un procédé de dissimulation d'erreur,
- un module de décision destiné à décider, pour des macroblocs, d'une exclusion du codage, une décision d'exclusion d'un macrobloc étant prise en fonction de la capacité à être reconstruit dudit macrobloc,
**caractérisé en ce qu'**il comprend également un module d'introduction d'un marqueur de resynchronisation dans le flux binaire suite à l'exclusion d'un ou plusieurs macroblocs.

5. Codeur selon la revendication 3 **caractérisé en ce qu'**il comprend un ou plusieurs modules destinés à réaliser les étapes caractéristiques de l'une des revendications 2 et 3.

6. Flux binaire comprenant des données codées d'une image numérique comprenant des macroblocs, ledit flux binaire étant tel que des macroblocs ne sont pas codés dans le flux binaire à au moins un endroit du flux binaire, lesdits macroblocs non codés ayant une capacité à être reconstruits par un procédé de dissimulation d'erreur, **caractérisé en ce qu'**un marqueur de resynchronisation est présent dans le flux binaire à l'endroit du flux binaire où des macroblocs ne sont pas codés.

7. Procédé de décodage d'un flux binaire comprenant des données codées d'une image numérique comprenant des macroblocs, ledit flux binaire comprenant des marqueurs de resynchronisation à intervalles réguliers, incluant :
- une étape de détection de macroblocs non codés en au moins un endroit du flux binaire,
- une étape de dissimulation d'erreur notamment activée pour les macroblocs non codés détectés dans l'étape de détection,
**caractérisé en ce que** l'étape de détection de macroblocs non codés comprend une sous-étape de détection destinée à détecter des intervalles non réguliers entre les marqueurs de resynchronisation.

8. Décodeur destiné à décoder un flux binaire comprenant des données codées d'une image numérique comprenant des macroblocs, incluant :
un module de détection destiné à détecter des macroblocs non codés en au moins un endroit du flux binaire,
un module de dissimulation d'erreur destiné à être notamment activé pour les macroblocs non codés détectés dans l'étape de détection,
**caractérisé en ce que** le module de détection de macroblocs non codés comprend un sous-module de détection destiné à détecter des intervalles non réguliers entre les marqueurs de resynchronisation.

9. Produit "programme d'ordinateur" pour un codeur comprenant un ensemble de fonctions et une ressource collective à laquelle les fonctions accèdent, **caractérisé en ce que** le produit "programme d'ordinateur" comprend un ensemble d'instructions qui, étant chargé dans un tel codeur, fait exécuter le procédé revendiqué dans une des revendications 1 à 3 au codeur.

10. Produit "programme d'ordinateur" pour un décodeur comprenant un ensemble de fonctions et une ressource collective à laquelle les fonctions accèdent, **caractérisé en ce que** le produit "programme d'ordinateur" comprend un ensemble d'instructions qui, étant chargé dans un tel décodeur, fait exécuter le procédé revendiqué dans la revendication 7 au décodeur.
